# EUROPÄISCHE PATENTSCHRIFT

(11) **EP 1 806 458 B1**
(45) Veröffentlichungstag und Bekanntmachung des Hinweises auf die Patenterteilung: **08.09.2010**
(21) Anmeldenummer: 06000238.3
(22) Anmeldetag: 06.01.2006
(51) Int. Cl.: E03F 11/00, E03B 3/00, B65D 88/76

(54) **Kunststoff-Tank**
Plastic tank
Réservoir en plastique

(43) Veröffentlichungstag der Anmeldung: 11.07.2007
(73) Patentinhaber: Roth, Manfred, 35232 Dautphetal (DE)
(72) Erfinder: Manfred Roth, Dipl.-Vw., 35232 Dautphetal (DE)
(74) Vertreter: Rohmann, Michael

(56) Entgegenhaltungen:
- DE-A1- 3 833 646
- DE-A1- 10 242 387
- DE-U1- 20 105 030
- FR-A- 2 715 385

## Beschreibung

Die Erfindung betrifft einen Kunststoff-Tank, insbesondere einen Kunststoff-Erdtank zur Lagerung von Wasser, Fäkalien und dergleichen. Die Erfindung bezieht sich also auf einen Tank aus Kunststoff, insbesondere auf einen unterirdischen Tank aus Kunststoff, der beispielsweise zur Lagerung von Regenwasser eingesetzt wird oder aber als Fäkalien-Sammelgrube. Der Kunststoff-Tank kann im Blasformverfahren oder im Rotationsformverfahren gefertigt werden und besteht vorzugsweise aus Polyethylen.

In der Patentschrift DE 38 33 646 A1 ist ein quaderförmiger Kunststoff-Tank zur Lagerung von Flüssigkeiten beschrieben, der sich aus mehreren Behältern zusammensetzt. Die Verbindung der Behälterelemente erfolgt über längenverstellbare Verbindungsstutzen, die einstückig miteinander verbunden werden. Die Behärterhälften ihrerseits können zur Stabilisierung mittels Spannbändern aneinander gebunden werden, um Auswölbungen im gefüllten Zustand zu verhindern.

Das Gebrauchsmuster DE 201 05 030 U1 lehrt einen ebenfalls quaderförmigen mehrteiligen Kunststoff-Tank, der auch den Anforderungen für den Betrieb als Erdtank genügt. Um den Druck des auf ihn lastenden Erdreichs aufnehmen zu können, wird der Tank durch Sicken stabilisiert. Die einzelnen Behälterelemente sind über Verbindungsstutzen einstückig miteinander verbunden, die über eine Öffnung in einem der Behälter befüllt und entleert werden können. - Ein ähnlicher Kunststoff-Tank ist aus DE 102 42 387 A1 bekannt. Dieser Kunststoff-Tank besteht aus zwei Behälterteilen, die in einem Öffnungsbereich miteinander verbunden sind.

Aus der Praxis sind Kunststoff-Erdtanks in verschiedenen Ausführungsformen bekannt. Diese bekannten Kunststoff-Erdtanks sind aus Stabilitätsgründen häufig zylinderförmig ausgebildet. Sie müssen eine ausreichende Stabilität gegen den anstehenden Erddruck aufweisen. Um eine solche ausreichende Erdstabilität sicherzustellen, haben die bekannten Kunststoff-Erdtanks oft große Wandstärken. Solche Kunststoff-Erdtanks werden in der Regel im Rotationsverfahren hergestellt. - Die Kunststoff-Erdtanks haben normalerweise Volumina von etwa 3500 I bis etwa 6000 I und die gängigsten Volumina liegen bei 5000 I bis 6000 I. Es gibt jedoch auch Bedarfsfälle mit wesentlich größeren Volumina. Der Durchmesser von bekannten zylinderförmigen Kunststoff-Erdtanks liegt in der Regel bei etwa 2 m. - Um eine hohe Stabilität bzw. eine hohe Erdstabilität insbesondere für großvolumige Behälter zu erreichen, sind weiterhin doppelwandige Tankausführungen bekannt. Die Herstellung dieser Kunststoff-Erdtanks ist aber zeit-, material- und kostenaufwändig und außerdem haben diese Behälter ein nachteilhaft hohes Gewicht.

Wenn zylinderförmige Kunststoff-Erdtanks mit geringerem Zylinderdurchmesser eingesetzt werden, können auch die Wandstärken reduziert werden. Aus der Praxis ist beispielsweise ein Kunststoff-Erdtank mit relativ kleinem Zylinderdurchmesser bekannt, der gleichsam als Rohr-Ring geformt ist. Dieser Behälter hat aber nur ein verhältnismäßig kleines Volumen. Für größere Volumina sind diese Erdtanks wegen der bei zunehmender Größe und damit zunehmender Ringöffnung abnehmenden Druckstabilität nicht geeignet. Aus der Praxis sind weiterhin Kunststoff-Erdtanks bekannt, die aus mehreren kleinen Behältern bestehen, die zu einem kommunizierenden Behältersystem mit den üblichen Volumina verbunden werden. Die Herstellung solcher Erdtanks ist material- und zeitaufwändig.

Demgegenüber liegt der Erfindung das technische Problem zugrunde, einen Kunststoff-Tank anzugeben, mit dem die beschriebenen Unzulänglichkeiten überwunden werden, der auf einfache, wenig aufwändige und kostengünstige Weise herstellbar ist, der insbesondere einwandig ausgeführt werden kann und der nichtsdestoweniger die Stabilitätsanforderungen erfüllt und vor allem auch eventuelle statische Zulassungsbedingungen erfüllt. - Statische Zulassungsbedingungen sind im Übrigen insbesondere für Kunststoff-Erdtanks nachzuweisen, die als Fäkalien-Sammelgrube oder im Rahmen von Kleinkläranlagen eingesetzt werden.

Zur Lösung des vorgenannten Problems lehrt die Erfindung einen Kunststoff-Tank, insbesondere einen Kunststoff-Erdtank zur Lagerung von Wasser, Fäkalien und dergleichen, wobei mindestens zwei mit Abstand voneinander angeordnete Längskammem vorgesehen sind und wobei die Längskammern über zumindest einen, bevorzugt zumindest zwei, quer zur Längsachse der Längskammern angeordnete Verbindungsstutzen miteinander verbunden sind und wobei an zumindest einem Verbindungsstutzen eine Domöffnung angeordnet ist. Gemäß einer bevorzugten Ausführungsform weist der erfindungsgemäße Kunststoff-Tank lediglich zwei der Längskammem auf. Nach einer anderen Ausführungsform weist der Kunststoff-Tank drei der genannten Längskammem auf. - Es liegt im Rahmen der Erfindung, dass jeweils zwei Längskammem über zumindest zwei quer zur Längsachse der Längskammern angeordnete Verbindungsstutzen miteinander verbunden sind. Gemäß einer Ausführungsform sind jeweils zwei Längskammem über lediglich zwei Verbindungsstutzen miteinander verbunden.

Längskammer meint im Rahmen der Erfindung eine Hohlkammer mit einem Innenraum, in dem insbesondere Wasser bzw. Regenwasser, und dergleichen Fäkalien aufgenommen werden können. Es liegt im Rahmen der Erfindung, dass die Längskammern parallel zueinander bzw, im Wesentlichen parallel zueinander angeordnet sind. Es liegt weiterhin im Rahmen der Erfindung, dass die Längskammem identisch bzw. im Wesentlichen identisch sind und insbesondere die gleiche Form und/oder die gleiche Größe aufweisen. Zweckmäßigerweise haben die Längskammern also auch identische Volumina. - Mit Verbindungsstutzen ist vorzugsweise eine quer zur Längsachse der Längskammem angeordnete Querkammer gemeint. Dass die Verbindungsstutzen bzw. die Querkammem quer zur Längsachse der Längskammem angeordnet sind, meint insbesondere, dass die Verbindungsstutzen senkrecht bzw. im Wesentlichen senkrecht zur Längsachse der Längskammem angeordnet sind. Zweckmäßigerweise sind die Verbindungsstutzen also rechtwinklig an die Längskammern angeschlossen. - Es versteht sich im Übrigen , dass der erfindungsgemäße Kunststoff-Tank zumindest eine Füll- und Entleeröffnung aufweist. - Der Kunststoff-Tank besteht vorzugsweise aus zumindest einem Polyolefin bzw. im Wesentlichen aus zumindest einem Polyolefin. Bevorzugt besteht der Kunststoff-Tank aus Polyethylen bzw. im Wesentlichen aus Polyethylen.

Eine sehr bevorzugte Ausführungsform der Erfindung ist **dadurch gekennzeichnet, dass** die Längskammern im Querschnitt kreisförmig und/oder oval ausgebildet sind. Vorzugsweise sind beide Längskammem zylinderförmig bzw. im Wesentlichen zylinderförmig ausgeführt.

Zweckmäßigerweise weisen die Längskammern quer zu ihrer Längsachse einen größten Durchmesser von maximal 150 cm, vorzugsweise von maximal 130 cm, bevorzugt von maximal 120 cm und sehr bevorzugt von maximal 110 cm auf. Nach ganz besonders bevorzugter Ausführungsform der Erfindung haben die Längskammern quer zu ihrer Längsachse einen größten Durchmesser von maximal 100 cm. Wenn die Längskammern zylinderförmig ausgebildet sind, handelt es sich bei den vorgenannten Durchmessern jeweils um den Zylinderdurchmesser. Es liegt im Rahmen der Erfindung, dass die Länge der Längskammem mehr als das Doppelte, vorzugsweise mehr als das Dreifache und besonders bevorzugt mehr als das Vierfache der Länge der Verbindungsstutzen (quer zur Längsachse der Längskammern) beträgt. Der Durchmesser der Verbindungsstutzen ist zweckmäßigerweise nicht größer bzw. nicht wesentlich größer als der Durchmesser der Längskammem quer zu ihrer Längsachse.

Es liegt weiterhin im Rahmen der Erfindung, dass die Längskammem des erfindungsgemäßen Kunststoff-Tanks einwandig ausgebildet sind. Zweckmäßigerweise sind auch die Verbindungsstutzen zwischen den Längskammem einwandig ausgeführt. Nach einer bevorzugten Ausführungsvariante sind alle Hohlkammern des erfindungsgemäßen Kunststoff-Tanks einwandig ausgebildet. Wie eingangs bereits ausgeführt, sind dagegen aus dem Stand der Technik großvolumige doppelwandige Tanks bekannt, die aufwendig gefertigt werden müssen und im Übrigen ein nachteilhaft hohes Gewicht haben.

Es liegt im Rahmen der Erfindung, dass die Verbindungsstutzen wie die Längskammem als Hohlkammern ausgebildet sind. Mit dem Begriff Querkammer ist hier im Übrigen ein Verbindungsstutzen gemeint, der als Hohlkammer ausgeführt ist. Eine besonders bevorzugte Ausführungsvariante der Erfindung ist **dadurch gekenntzeichnet, dass** zumindest ein Verbindungsstutzen als Hohlkammer ausgebildet ist und dass diese Hohlkammer des Verbindungsstutzens mit zumindest einer Längskammer in Verbindung steht. Mit anderen Worten steht gemäß dieser Ausführungsform die Hohlkammer des Verbindungsstutzens mit einem Innenraum zumindest einer Längskammer in Verbindung. Vorzugsweise sind die Verbindungsstutzen als Hohlkammer ausgebildet. Zweckmäßigerweise steht ein als Hohlkammer ausgebildeter Verbindungsstutzen mit beiden benachbarten Längskammem bzw. mit den Innenräumen beider benachbarter Längskammern in Verbindung. Es wurde bereits darauf hingewiesen, dass nach besonders bevorzugter Ausführungsvariante alle Hohlkammern des erfindungsgemäßen Kunststoff-Tanks einwandig ausgebildet sind. Dabei weist der erfindungsgemäße Kunststoff-Tank nichtsdestoweniger ein relativ hohes Volumen von insbesondere mehr als 3000 I auf. Das Volumen bezieht sich dabei auf das gesamte Fassungsvermögen aller Hohlkammem der Kunststoff-Tanks. Vorzugsweise weist der erfindungsgemäße Kunststoff-Tank ein Volumen von mindestens 3500 I auf und zeichnet sich durch eine hohe Druckfestigkeit bzw. Erdstabilität aus.

Verbindungsstutzen, an denen eine Domöffnung angeordnet ist, sind als Hohlkammer ausgebildet. Wenn ein Verbindungsstutzen eine Domöffnung aufweist, ist dieser Verbindungsstutzen bezüglich der Einbauposition des erfindungsgemäßen Kunststoff-Tanks bevorzugt bereichsweise als stehender Zylinder mit zu den benachbarten Längskammern angeformten Übergangsradien ausgebildet.

Eine bevorzugte Ausführungsvariante der Erfindung ist **dadurch gekennzeichnet, dass** zwischen den Längskammern zumindest ein Verbindungselement angeordnet ist, das auch die Verbindungsstutzen miteinander verbindet. Das Verbindungselement ist vorzugsweise stoffschlüssig mit den Längskammern verbunden und bevorzugt auch stoffschlüssig mit den Verbindungsstutzen verbunden. Gemäß einer bevorzugten Ausführungsform ist das Verbindungselement doppelwandig ausgeführt. Das Verbindungselement trägt in vorteilhafter Weise zur Stabilitätserhöhung des erfindungsgemäßen Kunststoff-Tanks bei. Bei dem Verbindungselement handelt es sich zweckmäßigerweise um eine Kunststoffplatte, die sowohl die Längskammern als auch die Verbindungsstutzen miteinander verbindet. Nach einer bevorzugten Ausführungsvariante der Erfindung ist eine zwischengeschaltete Kunststoffplatte auf Höhe der Mittellängsachse der Längskammern zwischen den Längskammern angeordnet. Die Kunststoffplatte ist vorzugsweise stoffschlüssig mit den Längskammern bzw. mit den Verbindungsstutzen verbunden.

Gemäß einer Ausführungsform der Erfindung wird der erfindungsgemäße Kunststoff-Tank durch ein Rotationsformverfahren hergestellt. Nach einer anderen Ausführungsform der Erfindung kann der erfindungsgemäße Kunststoff-Tank durch ein Blasformverfahren hergestellt werden. Diese letztgenannte Verfahrensweise empfiehlt sich vor allem bei höheren Stückzahlen.

Gegenstand der Erfindung ist auch ein Kunststoff-Tank nach Patentanspruch 9. Gegenstand der Erfindung ist in diesem Zusammenhang weiterhin auch ein Verfahren zur Herstellung eines Kunststoff-Tanks, wobei zunächst ein erster kleinerer Kunststoff-Tank in einem Arbeitsgang hergestellt wird, wobei anschließend die beiden Längskammern des kleineren Kunststoff-Tanks quergetrennt werden, wobei zwischen den durch die Quertrennung entstandenen Längskammerhälften vorgefertigte Längskammer-Abschnitte eingesetzt werden und mit den Längskammerhälften verbunden werden, so dass ein zweiter größerer Kunststoff-Tank gebildet wird. Der erste kleinere Kunststoff-Tank kann im Blasformverfahren oder im Rotationsformverfahren hergestellt werden. Dann erfolgt eine Quertrennung der kleinen Behältereinheit und durch Verbinden der getrennten Behälterkomponenten mit vorgefertigten Längskammer-Abschnitten wird eine Behälterverlängerung entsprechend dem gewünschten Volumen durchgeführt. Wenn nach bevorzugter Ausführungsform die Längskammern des kleineren Kunststoff-Tanks durch ein Verbindungselement verbunden sind, erfolgt bei der Quertrennung der Längskammern auch eine Quertrennung dieses Verbindungselementes.

Nach einer Ausführungsvariante der Erfindung sind Einformungen in dem Boden des Kunststoff-Tanks mit einem Füllmaterial unterstützt. Bei dem Füllmaterial handelt es sich vorzugsweise um Styropor. - Gemäß einer sehr bevorzugten Ausführungsform können die Hohlräume des erfindungsgemäßen Kunststoff-Tanks mit geschlossenen oder teilweise geschlossenen Trennwänden in separate Abschnitte unterteilt werden.

Die die Längskammern des Kunststoff-Tanks verbindenden Verbindungsstutzen sind vorzugsweise zumindest bereichsweise zylinderförmig ausgebildet. Der größte Durchmesser der Verbindungsstutzen (gemessen in Längsrichtung der Längskammern) beträgt zweckmäßigerweise maximal 150 cm, vorzugsweise maximal 130 cm, bevorzugt maximal 120 cm und sehr bevorzugt maximal 110 cm. Gemäß einer besonders bevorzugten Ausführungsvariante beträgt der größte Durchmesser der Verbindungsstutzen (gemessen in Längsrichtung der Längskammern) maximal 100 cm. Zweckmäßigerweise entspricht der genannte Durchmesser der Verbindungsstutzen zumindest in etwa dem Durchmesser der Längskammern quer zu ihrer Längsrichtung.

Der Erfindung liegt die Erkenntnis zugrunde, dass der erfindungsgemäß ausgestaltete Kunststoff-Tank bzw. Kunststoff-Erdtank auch bei größeren Volumina eine überraschend hohe Druckfestigkeit bzw. eine überraschend hohe Erdstabilität aufweist. Mit anderen Worten zeichnet sich ein erfindungsgemäßer Erdtank durch eine hohe Stabilität gegen den Erddruck aus, obwohl er aus Kunststoff hergestellt ist und die eingangs beschriebenen aus dem Stand der Technik bekannten Nachteile nicht aufweist. Der erfindungsgemäße Kunststoff-Tank erfüllt die statischen Zulassungsanforderungen beispielsweise beim Einsatz als Fäkalien-Sammelbehälter. Es muss betont werden, dass die hervorragende Druckfestigkeit bzw. Erdstabilität gegeben ist, obwohl der erfindungsgemäße Tank bzw. Erdtank gemäß besonders bevorzugter Ausführungsform einwandig ausgebildet wird. Aus diesem Grunde hat der erfindungsgemäße Tank im Vergleich zu aus dem Stand der Technik bekannten doppelwandigen Behältern auch ein vorteilhaft geringes Gewicht. Es ist eine kostengünstige Fertigung sowohl im Blasformverfahren als auch im Rotationsformverfahren möglich. Von besonderer Bedeutung ist, dass der erfindungsgemäße Kunststoff-Tank trotz eines relativ hohen Volumens durch die erfindungsgemäße Aufteilung auf mindestens zwei Längskammern eine verhältnismäßig niedrige Höhe im eingebauten Zustand aufweisen kann. Dadurch ist für den Einbau als Erdtank auch nur eine Grube mit verhältnismäßig geringer Tiefe notwendig und aus diesem Grunde ist dieser Einbau relativ kostengünstig, da tiefe Gruben deutlich teurer als volumenmäßig vergleichbare flache Gruben sind. Mit anderen Worten sind für einen erfindungsgemäßen Kunststoff-Erdtank lediglich flache Gruben erforderlich, die im Vergleich zu den aus dem Stand der Technik bekannten Maßnahmen einen deutlich kostensparenden Erdaushub ermöglichen. Besonders vorteilhaft sind erfindungsgemäße Kunststoff-Tanks, deren Längskammern bzw. deren zylinderförmige Längskammern jeweils einen Durchmesser von maximal 100 cm aufweisen. Diese erfindungsgemäßen Kunststoff-Tanks können auch insbesondere auf Platz sparende Weise beispielsweise mit Lastkraftwagen, auf Bahnwaggons oder in Containern transportiert werden. Es versteht sich im Übrigen, dass der erfindungsgemäße Kunststoff-Tank auch oberirdisch einzeln oder gestapelt aufgestellt werden kann. Dabei können die einzelnen Tanks auch miteinander verbunden werden.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht eines erfindungsgemäßen Kunststoff-Tanks in einer ersten Ausführungsform,
- Fig. 2: eine Draufsicht auf den Gegenstand nach Fig. 1,
- Fig. 3: eine Seitenansicht des Gegenstandes gemäß Fig. 1,
- Fig. 4: eine Frontansicht des Gegenstandes nach Fig. 1,
- Fig.5: eine perspektivische Ansicht eines erfindungsgemäßen Kunststoff-Tanks in einer zweiten Ausführungsform,
- Fig. 6: eine Draufsicht auf den Gegenstand nach Fig. 5,
- Fig.7: eine perspektivische Ansicht eines erfindungsgemäßen Kunststoff-Tanks in einer dritten Ausführungsform,
- Fig. 8: eine Draufsicht auf den Gegenstand nach Fig. 7,
- Fig. 9: eine Seitenansicht des Gegenstandes gemäß Fig. 7,
- Fig. 10: eine Frontansicht des Gegenstandes nach Fig. 7,
- Fig. 11: eine perspektivische Ansicht eines erfindungsgemäßen Kunststoff-Tanks in einer vierten Ausführungsform für die Verlängerung zu einem größeren Kunststoff-Tank,
- Fig. 12: eine Draufsicht auf den Gegenstand nach Fig. 11,
- Fig. 13: eine Seitenansicht des Gegenstandes gemäß Fig. 11 und
- Fig. 14: eine Frontansicht des Gegenstandes nach Fig. 11.

Die Figuren zeigen einen erfindungsgemäßen Kunststoff-Tank, der im Ausführungsbeispiel als Kunststoff-Erdtank zur Lagerung von Regenwasser, zur Lagerung von Fäkalien oder dergleichen eingesetzt wird. Der Kunststoff-Erdtank weist zwei mit Abstand voneinander angeordnete Längskammern 1 auf. Die beiden Längskammern 1 sind vorzugsweise und im Ausführungsbeispiel parallel zueinander angeordnet und weisen im Ausführungsbeispiel nach den Figuren die gleiche Größe und die gleiche Form auf. Vorzugsweise und in den Figuren sind die Längskammern 1 im Querschnitt kreisförmig und somit als zylinderförmige Längskammern 1 ausgebildet. Die Längskammern 1 weisen vorzugsweise quer zu ihrer Längsachse einen Durchmesser von maximal 100 cm auf. Somit haben die Längskammern 1 nur eine relativ geringe Höhe und beim unterirdischen Einbau des erfindungsgemäßen Kunststoff-Erdtanks ist folglich in vorteilhafter Weise lediglich eine flache Grube erforderlich. Es liegt im Rahmen der Erfindung, dass die Längskammern 1 einwandig ausgebildet sind, wodurch das Gewicht des Kunststoff-Erdtanks vorteilhaft reduziert wird.

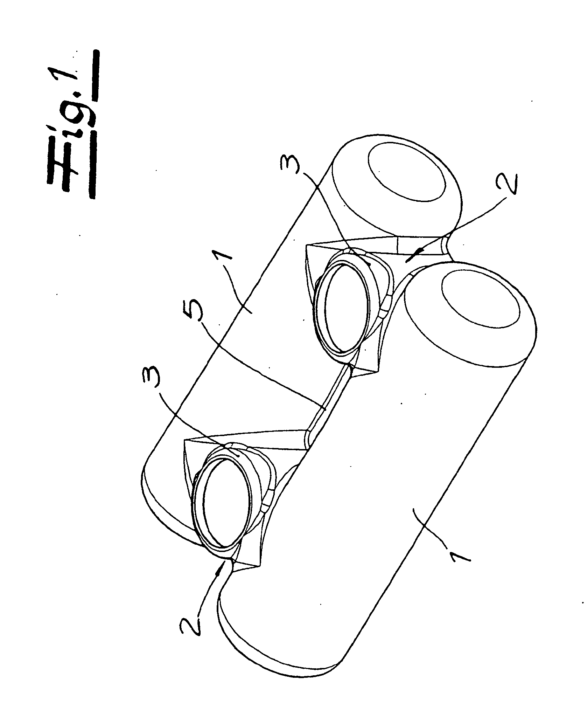

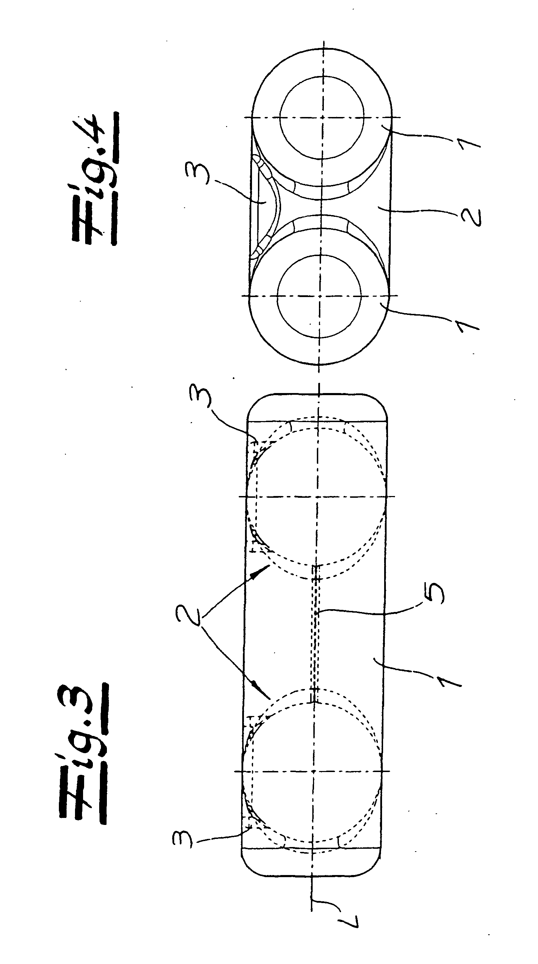

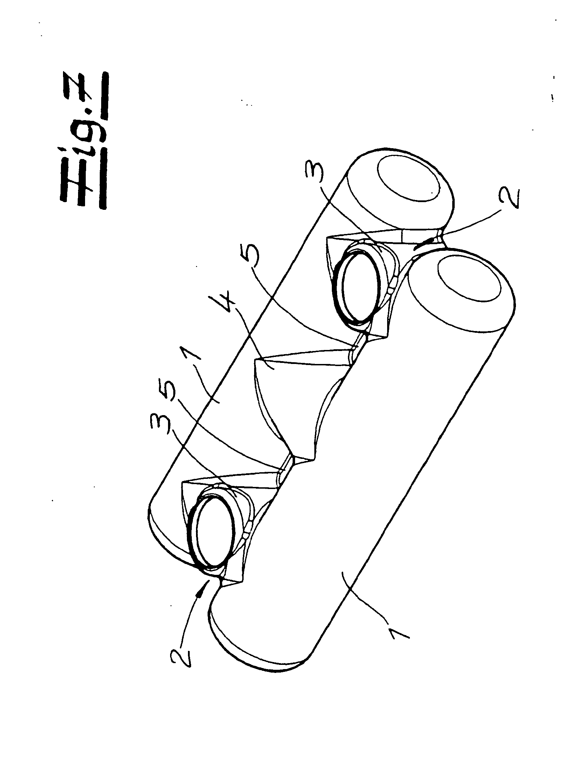

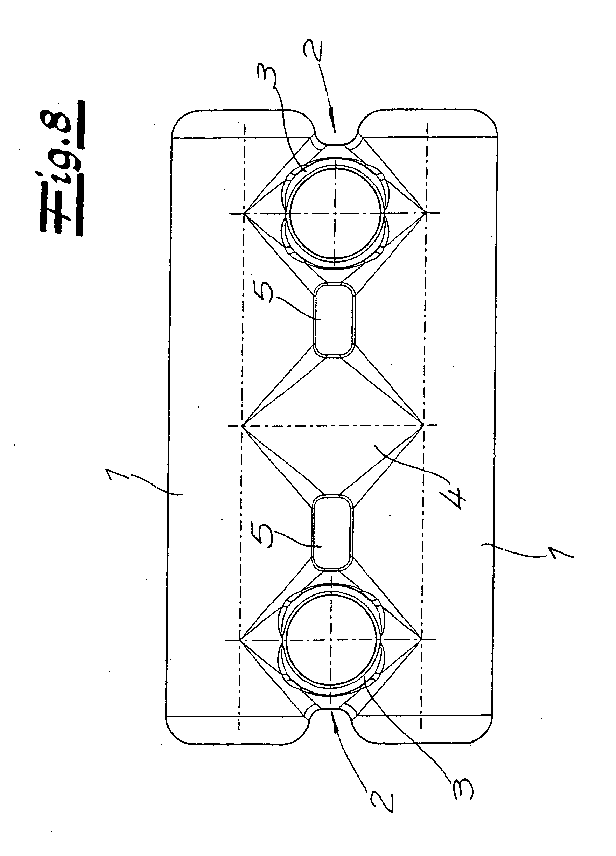

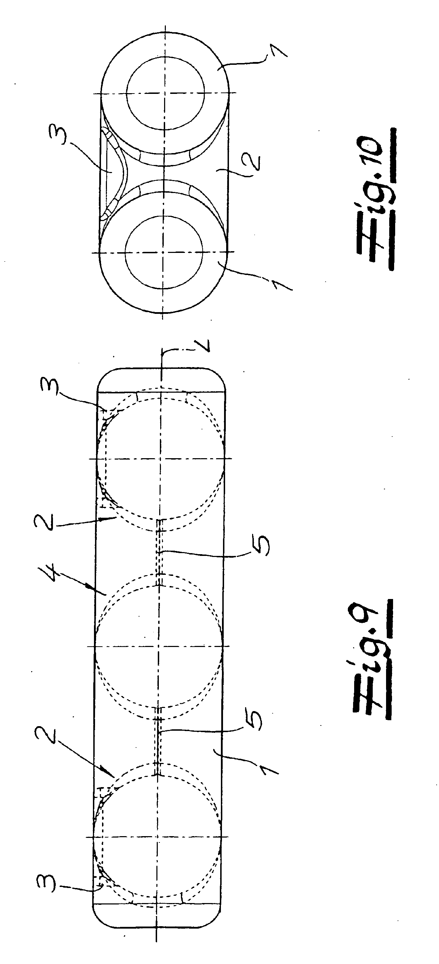

Im Ausführungsbeispiel nach den Fig. 1 bis 6 sind die Längskammern 1 über zwei senkrecht zur Längsachse der Längskammern 1 angeordnete Verbindungsstutzen 2 miteinander verbunden. Die Verbindungsstutzen 2 sind vorzugsweise und im Ausführungsbeispiel als Hohlkammern (Querkammern) ausgebildet und die Hohlkammern der Verbindungsstutzen 2 stehen jeweils mit den Innenräumen beider Längskammern 1 in Verbindung. Die beiden Verbindungsstutzen 2 in den Fig. 1 bis 6 und die beiden äußeren Verbindungsstutzen 2 in den Fig. 7 bis 10 weisen einen oberseitigen Abschnitt 3 in Form eines stehenden Zylinders auf. Dieser oberseitige Abschnitt 3 in Form eines stehenden Zylinders ist über angeformte Übergangsradien mit den benachbarten Behälterbereichen verbunden. Es liegt im Rahmen der Erfindung, dass an einem auf diese Weise ausgestalteten Verbindungsstutzen 2 eine Domöffnung angeordnet ist.

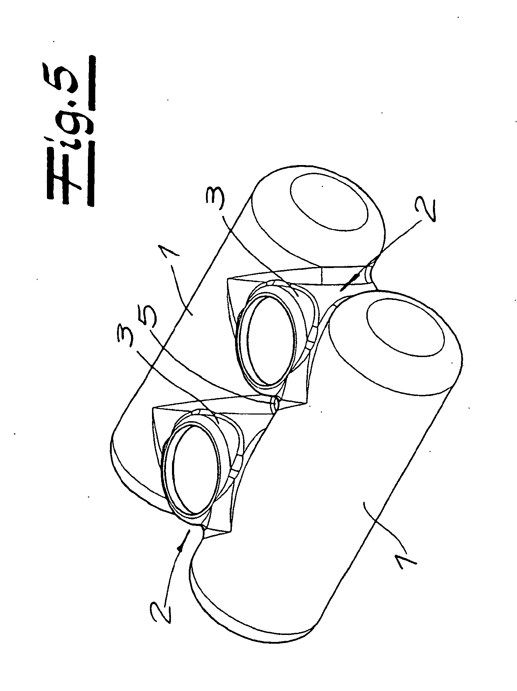

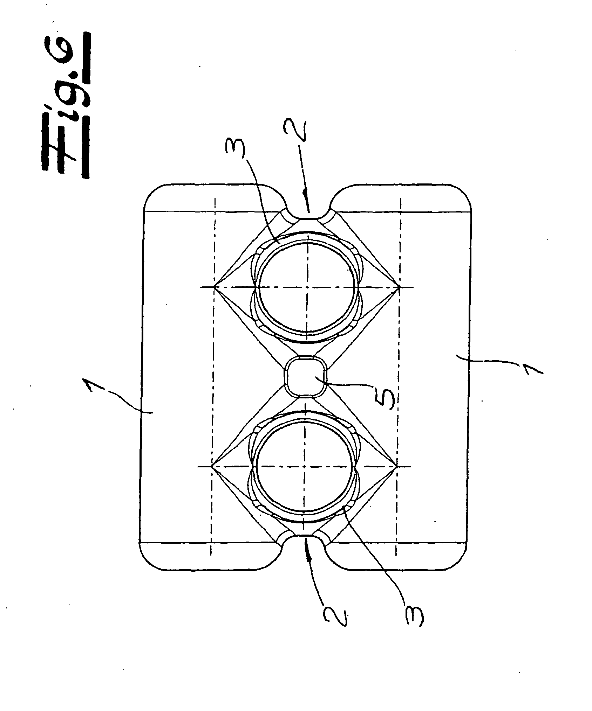

Im Ausführungsbeispiel nach den Fig. 7 bis 10 ist ein zusätzlicher mittlerer Verbindungsstutzen 4 vorgesehen. Dieser in den Fig. 7 bis 10 dargestellte Kunststoff-Erdtank weist ein relativ großes Fassungsvermögen auf und das Volumen mag im Ausführungsbeispiel 7000 I betragen. Der in den Fig. 1 bis 4 dargestellte Kunststoff-Erdtank mag dagegen ein Fassungsvermögen von 5500 I haben. Der Kunststoff-Erdtank nach den Fig. 5 und 6 hat ein geringeres Fassungsvermögen, das im Ausführungsbeispiel 4000 l betragen mag. Bei allen in den Figuren dargestellten Kunststoff-Erdtanks handelt es sich um relativ großvolumige Behälter.

In allen Ausführungsvarianten nach den Figuren und nach sehr bevorzugter Ausführungsform stehen die Längskammern 1 bezüglich ihrer Längsrichtung über die Verbindungsstutzen 2 bzw. über die äußeren Verbindungsstutzen 2 vor. Die Verbindungsstutzen 2, 4 sind in den Ausführungsbeispielen rechtwinklig an die Längskammern 1 angeschlossen.

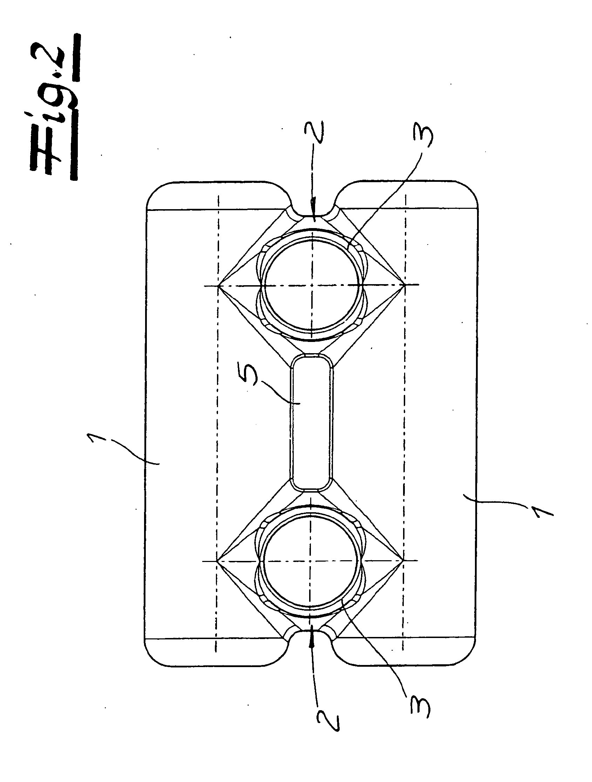

Im Ausführungsbeispiel nach den Fig. 1 bis 6 sind die Längskammern 1 und die beiden Verbindungsstutzen 2 jeweils durch eine Kunststoffplatte 5 miteinander verbunden (siehe insbesondere Fig. 2 und 6). Diese Kunststoffplatte 5 ist dabei vorzugsweise stoffschlüssig mit den Längskammern 1 und mit den Verbindungsstutzen 2 verbunden. Die Kunststoffplatte 5 ist im Ausführungsbeispiel auf Höhe der Mittellängsachse L der Längskammern 1 angeordnet.

Im Ausführungsbeispiel nach den Fig. 7 bis 10 sind jeweils zwei Verbindungsstutzen 2, 4 und die Längskammern 1 durch eine Kunststoffplatte 5 miteinander verbunden. Die Verbindung der Kunststoffplatten 5 mit den Längskammern 1 und mit den Verbindungsstutzen 2, 4 erfolgt hier vorzugsweise ebenfalls stoffschlüssig. Auch in diesem Ausführungsbeispiel liegt die Kunststoffplatte 5 auf Höhe der Mittellängsachse L der Längskammern 1.

Der Behälterboden des Kunststoff-Erdtanks weist nach einer bevorzugten Ausführungsform nicht dargestellte Einformungen auf, die mit vorgefertigtem Füllmaterial, insbesondere mit Styropor gefüllt sind. Auf diese Weise kann die Stabilität bzw. Erdstabilität des Kunststoff-Erdtanks weiter erhöht werden. Es liegt im Übrigen im Rahmen der Erfindung, dass die Innenräume bzw. Hohlräume des Kunststoff-Erdtanks durch nicht dargestellte Trennwände in Abschnitte aufgeteilt werden.

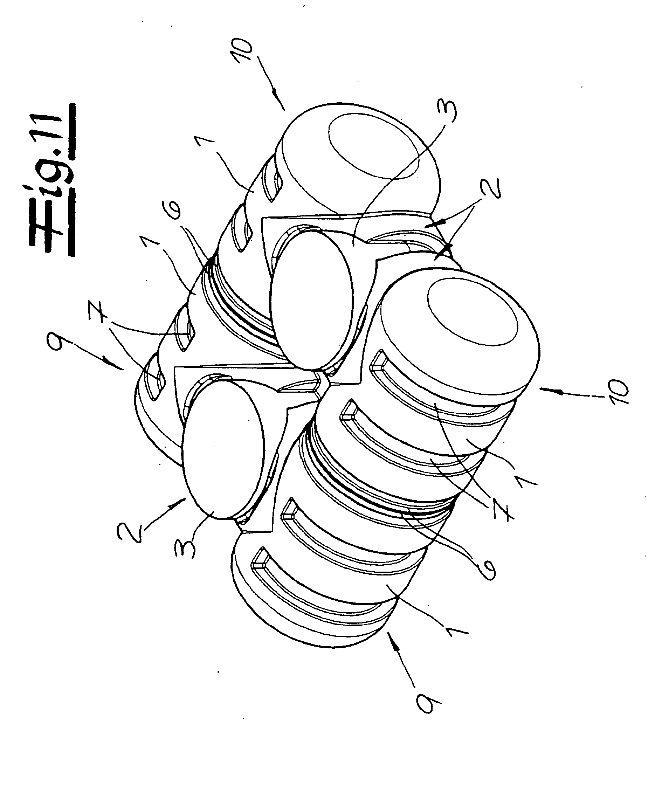

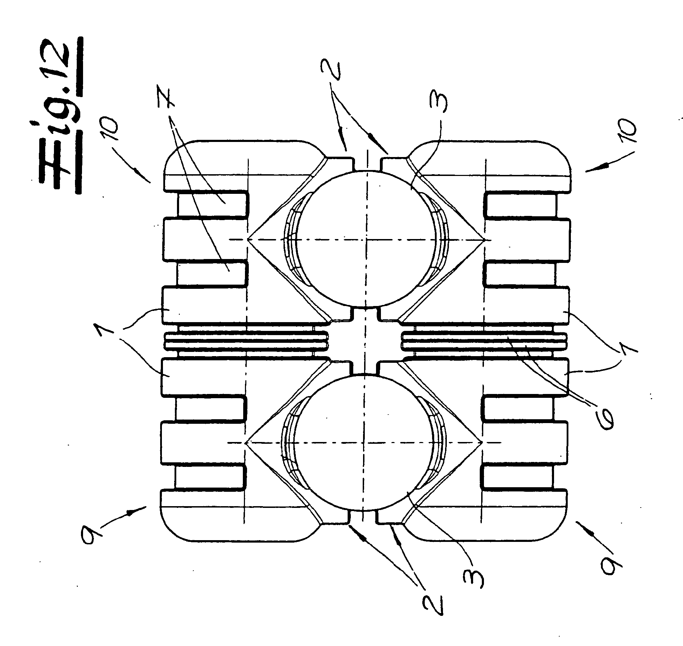

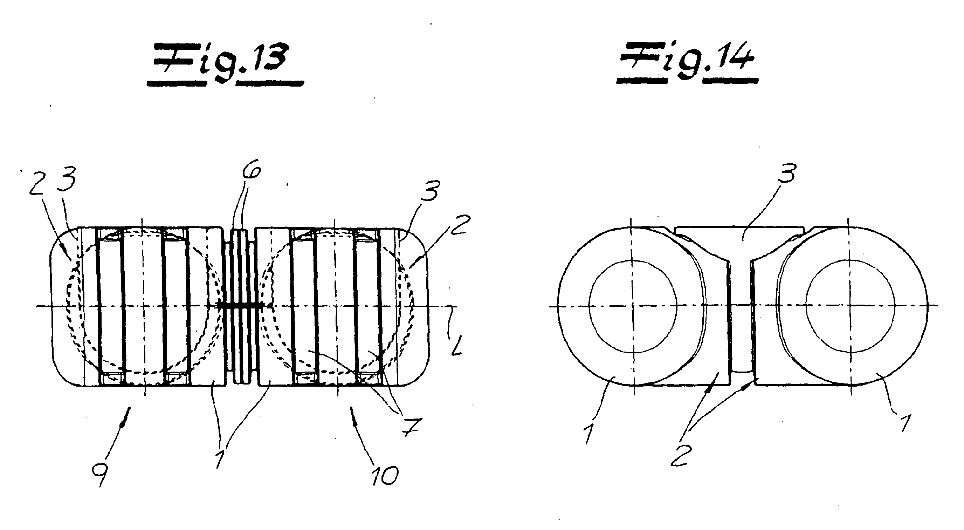

Die Fig. 11 bis 14 beziehen sich auf eine besondere Ausführungsform eines erfindungsgemäßen Kunststoff-Erdtanks bzw. auf ein bevorzugtes Verfahren zur Herstellung eines erfindungsgemäßen Kunststoff-Erdtanks. Zunächst wird vorzugsweise im Blasformverfahren eine kleine in den Fig. 11 bis 14 dargestellte Behältereinheit (erster kleinerer Kunststoff-Erdtank) gefertigt. Das Volumen bzw. das Fassungsvermögen dieser kleinen Behältereinheit mag im Ausführungsbeispiel 3500 I betragen. Die kleine Behältereinheit weist an jeder Längskammer 1 zwei gegenüberliegende ausgeformte Trennflanschansätze 6 auf, die jeweils über den Umfang der zugeordneten Längskammer 1 umlaufen. Die Trennflanschansätze 6 sind zweckmäßigerweise bezüglich der Längsrichtung jeder Längskammer 1 mittig an der Längskammer 1 vorgesehen. Die Längskammern 1 der in den Fig. 11 bis 14 dargestellten kleinen Behältereinheit weisen im Übrigen eingeformte Verstärkungssicken 7 auf, die zur Stabilisierung der Längskammern 1 bzw. des Kunststoff-Erdtanks beitragen.

Nach Herstellung der in den Fig. 11 bis 14 dargestellten kleinen Behältereinheit werden die beiden Längskammern 1 jeweils zwischen den Trennflanschansätzen 6 getrennt. Anschließend erfolgt eine Verlängerung der beiden Längskammern 1, indem nicht dargestellte vorgefertigte Längskammer-Abschnitte zwischen den beiden durch die Trennung entstandenen Behälterhälften eingesetzt und an den Längskammerhälften 9, 11 der Behälterhälften fixiert werden. Die vorgefertigten Längskammer-Abschnitte werden zweckmäßigerweise zwischen den Trennflanschansätzen 6 eingesetzt. Die Fixierung der Längskammer-Abschnitte erfolgt vorzugsweise durch Anschweißen. Die Länge der Längskammer-Abschnitte wird in Abhängigkeit des gewünschten Volumens des resultierenden Kunststoff-Erdtanks gewählt (zweiter größerer Kunststoff-Erdtank).

## Patentansprüche

1. Kunststoff-Tank zur Lagerung von Wasser, Fäkalien und dergleichen, wobei mindestens zwei mit Abstand voneinander angeordnete Längskammem (1) vorgesehen sind, wobei die Längskammern (1) über zumindest einen, bevorzugt zwei quer zur Längsachse der Längskammem (1) angeordnete Verbindungsstutzen (2) miteinander verbunden sind und wobei an zumindest einem Verbindungsstutzen (2) eine Domöffnung angeordnet ist.

2. Kunststoff-Tank nach Anspruch 1, wobei die Längskammem (1) und/oder die Verbindungsstutzen (2) im Querschnitt kreisförmig und/oder oval ausgebildet sind.

3. Kunststoff-Tank nach einem der Ansprüche 1 oder 2, wobei die Längskammern quer zu ihrer Längsachse einen größten Durchmesser von maximal 150 cm, vorzugsweise einen größten Durchmesser von maximal 100 cm aufweisen.

4. Kunststoff-Tank nach einem der Ansprüche 1 bis 3, wobei die Längskammern (1) einwandig ausgebildet sind.

5. Kunststoff-Tank nach einem der Ansprüche 1 bis 4, wobei zumindest ein Verbindungsstutzen (2) als Hohlkammer ausgebildet ist und wobei die Hohlkammer mit zumindest einer Längskammer (1) in Verbindung steht.

6. Kunststoff-Tank nach einem der Ansprüche 1 bis 5, wobei zwischen den Längskammern (1) ein Verbindungselement angeordnet ist, das sowohl die Längskammern (1) als auch die Verbindungsstutzen (2) miteinander verbindet.

7. Kunststoff-Tank nach einem der Ansprüche 1 bis 6, hergestellt durch ein Blasformverfahren oder durch ein Rotationsverfahren.

8. Kunststoff-Tank, zusammengesetzt aus zwei Hälften eines quergeteilten ersten kleinen Kunststoff-Tanks nach einem der Ansprüche 1 bis 7, wobei die beiden Hälften durch zusätzlich eingesetzte Längskammer-Abschnitte zu einem zweiten größeren Kunststoff-Tank nach einem der Ansprüche 1 bis 7 vergrößert sind.

## Claims

1. A plastic tank for storing water, faecal matter and the like, wherein at least two longitudinal chambers (1) which are arranged at a distance from each other are provided, wherein the longitudinal chambers (1) are connected to each other by means of at least one, preferably two connecting pieces (2) which are arranged transversely to the longitudinal axis of the longitudinal chambers (1) and wherein a dome opening is arranged on at least one connecting piece (2).

2. The plastic tank according to Claim 1, wherein the longitudinal chambers (1) and/or the connecting pieces (2) have a circular and/or oval cross section.

3. The plastic tank according to one of Claims 1 or 2, wherein the longitudinal chambers have a greatest diameter of no more than 150 cm, preferably a greatest diameter of no more than 100 cm transversely to their longitudinal axis.

4. The plastic tank according to one of Claims 1 to 3, wherein the longitudinal chambers (1) are single-walled.

5. The plastic tank according to one of Claims 1 to 4, wherein at least one connecting piece (2) is configured as a hollow chamber and wherein the hollow chamber is connected to at least one longitudinal chamber (1).

6. The plastic tank according to one of Claims 1 to 5, wherein a connecting element is arranged between the longitudinal chambers (1), which connecting element connects the longitudinal chambers (1) and the connecting pieces (2) to each other.

7. The plastic tank according to one of Claims 1 to 6, produced by a blow moulding process or by a rotary process.

8. The plastic tank, composed of two halves of a transversely divided first small plastic tank according to one of Claims 1 to 7, wherein the two halves are enlarged to form a second larger plastic tank according to one of Claims 1 to 7 by additionally inserted longitudinal chamber sections.

## Revendications

1. Réservoir en matière synthétique pour le stockage d'eau, de matières fécales et similaires, sur lequel au moins deux chambres longitudinales (1) disposées à distance l'une de l'autre sont prévues, les chambres longitudinales (1) étant reliées entre elles au moyen d'au moins, de préférence deux tubulures de liaison (2) disposées transversalement à l'axe longitudinal des chambres longitudinales (1) et une ouverture de mandrin étant disposée sur au moins une tubulure de liaison (2).

2. Réservoir en matière synthétique selon la revendication 1, les chambres longitudinales (1) et/ou les tubulures de liaison (2) étant conçues avec une section circulaire et/ou ovale.

3. Réservoir en matière synthétique selon l'une quelconque des revendications 1 ou 2, les chambres longitudinales présentant transversalement à leur axe longitudinal un plus grand diamètre de 150 cm maximum, de préférence un plus grand diamètre de 100 cm maximum.

4. Réservoir en matière synthétique selon l'une quelconque des revendications 1 à 3, les chambres longitudinales (1) étant conçues avec une paroi.

5. Réservoir en matière synthétique selon l'une quelconque des revendications 1 à 4, au moins une tubulure de liaison (2) étant conçue comme chambre creuse et la chambre creuse étant en liaison avec au moins une chambre longitudinale (1).

6. Réservoir en matière synthétique selon l'une quelconque des revendications 1 à 5, un élément de liaison étant disposé entre les chambres longitudinales (1), lequel relie aussi bien les chambres longitudinales (1) que les tubulures de liaison (2) les unes avec les autres.

7. Réservoir en matière synthétique selon l'une quelconque des revendications 1 à 6, fabriqué par un procédé de formage par soufflage ou par un procédé de rotation.

8. Réservoir en matière synthétique constitué de deux moitiés d'un premier petit réservoir en matière synthétique divisé en travers selon l'une quelconque des revendications 1 à 7, les deux moitiés étant agrandies par des parties de chambre longitudinale insérées en supplément pour obtenir un second réservoir en matière synthétique assez grand selon l'une quelconque des revendications 1 à 7.
